# EUROPEAN PATENT APPLICATION

(11) **EP 4 672 689 A1**
(43) Date of publication of application: **31.12.2025**
(21) Application number: 24306052.2
(22) Date of filing: 28.06.2024
(51) Int. Cl.: H04L 41/0266, H04L 41/0816, H04L 41/0866, H04L 41/0894, H04L 41/0806, H04L 41/0826, H04L 43/0805, H04L 43/0823, H04L 43/0852, H04L 43/0876

(54) **COMMUNICATIONS MANAGEMENT SYSTEMS AND METHODS**

(71) Applicant: Rockwell Collins France S.A.S., 31701 Blagnac (FR)
(72) Inventor: TRINCAL, Frédéric, 43260 Saint-Pierre-Eynac (FR); PELLESCHI, Stéphane, 81500 Bannières (FR)
(74) Representative: Dehns

(57) **Abstract**

An aerospace communications management system comprising: a communications router configured to receive information associated with a first communication device and/or a second communication device; and a first controller and a second controller each implemented as a microservice and configured to obtain respective first and second information associated with the first and second communication device, the first information being different from the second information. The first and second controllers are configured to reconfigure the respective information into a common format suitable to be received by the communications router. The first controller is configured to obtain first media policy information relating to a first media policy governing the use of the first communication device, to determine, based on the first information and the first media policy information, that the requirements of the first media policy are fulfilled; and to relay, based on the determination, the reconfigured first information to the communications router.

## Description

### TECHNICAL FIELD

The present disclosure relates to communications management methods and systems and, in particular, to aerospace communications management methods and systems.

### BACKGROUND

Many different media can be used for aerospace communications applications (whether air to air, air to ground, or ground to ground). Examples include HF, VHF, UHF radio communications, WiFi, cellular, satellite communications and others. Each media type has specific characteristics such as availability, speed, latency, etc. that may be different from those of other media types. In addition, different user policies may be relevant to different media types. Conventional communications systems use a communications router to manage the media policies for different types of communications media and to manage communications traffic routing.

The inventors have realised that there is a need for improved communications management methods and systems.

### SUMMARY

A first aspect of the present disclosure relates to an aerospace communications management system comprising: a communications router configured to receive information associated with a first communication device and/or a second communication device and to determine, based on the received information, at least one action to be taken; a first controller implemented as a microservice and configured to obtain first information associated with the first communication device; and a second controller implemented as a microservice and configured to obtain second information associated with the second communication device, wherein the first information is different from the second information; wherein the first controller is configured to reconfigure the first information into reconfigured first information in a format suitable to be received by the communications router; wherein the second controller is configured to reconfigure the second information into reconfigured second information in the same format suitable to be received by the communications router; wherein the first controller is configured to obtain first media policy information relating to a first media policy governing the use of the first communication device, to determine, based on the first information and the first media policy information, that the requirements of the first media policy are fulfilled; and to relay, based on the determination that the requirements of the first media policy are fulfilled, the reconfigured first information to the communications router.

Optionally, the second controller is configured to obtain second media policy information relating to a second media policy governing the use of the second communication device (125), to determine, based on the second information and the second media policy information, that the requirements of the second media policy are fulfilled; and to relay, based on the determination that the requirements of the second media policy are fulfilled, the reconfigured second information to the communications router.

Optionally, the first controller and the second controller are implemented in separate computing devices.

Optionally, each of the first information and the second information comprises at least one of: link status, speed, latency, signal quality and/or media cost.

Optionally, the first controller and the second controller is/are configured to obtain sensor data and to use the sensor data when determining that the requirements of the respective first and/or second media policy have been fulfilled.

Optionally, the communications management system further comprises a third controller implemented as a microservice and configured to obtain third information associated with a third communication device, wherein the third information is different from the first information and the second information, wherein the third controller is configured to reconfigure the third information into reconfigured third information in the same format suitable to be received by the communications router, wherein the third controller is configured to obtain third media policy information relating to a third media policy governing the use of the third communication device, to determine, based on the third information and the third media policy information, that the requirements of the third media policy are fulfilled; and to relay, based on the determination that the requirements of the third media policy are fulfilled, the reconfigured third information to the communications router.

A second aspect of the present disclosure relates to an aerospace communications system comprising a first communication device configured to transmit communications in a first format, a second communication device configured to transmit communications in a second format, and a communications management system as described herein.

Optionally, the communications system comprises a third communication device configured to transmit communications in a third format.

A third aspect of the present disclosure relates to a computer-implemented method of managing communications in an aerospace communications system comprising a first communication device configured to transmit communications in a first format, a second communication device configured to transmit communications in a second format, a communications router configured to receive information associated with the first communication device and/or the second communication device and to determine, based on the received information, an action to be taken, a first controller implemented as a microservice and configured to obtain first information associated with the first communication device; and a second controller implemented as a microservice and configured to obtain second information associated with the second communication device; wherein the method comprises: obtaining, by the first controller, the first information; obtaining, by the first controller, first media policy information relating to a first media policy governing the use of the first communication device; determining, by the first controller, based on the first information and the first media policy information, that the requirements of the first media policy are fulfilled; reconfiguring, by the first controller, the first information into another format suitable to be received by the communications router; relaying, by the first controller, the reconfigured first information to the communications router; and determining, by the communications router, based on the received reconfigured first information, at least one action to be taken.

Optionally, obtaining, by the second controller, the second information in the second format different from the first format; obtaining, by the second controller, second media policy information relating to a second media policy governing the use of the second communication device; determining, by the second controller, based on the second information and the second media policy information, that the requirements of the second media policy are fulfilled; reconfiguring, by the second controller, the second information into the other format suitable to be received by the communications router; relaying, by the second controller, the reconfigured second information to the communications router; and determining, by the communications router, based on the received reconfigured second information, at least one action to be taken.

Optionally, the method further comprises: instantiating a third microservice as a third controller configured to obtain third information associated with a third communication device, the third information being in a different format from the first and second formats; obtaining, by the third controller, the third information; obtaining, by the third controller, third media policy information relating to a third media policy governing the use of the third communication device; determining, by the third controller, based on the third information and the third media policy information, that the requirements of the third media policy are fulfilled; reconfiguring, by the third controller, the third information into the other format suitable to be received by the communications router; relaying, by the third controller, the reconfigured third information to the communications router; and determining, by the communications router, based on the received reconfigured third information, at least one action to be taken.

Optionally, obtaining first information and/or second information and/or third information and/or first media policy information and/or second media policy information and/or third media policy information comprises retrieving information from at least one memory resource.

Optionally, obtaining first information comprises receiving information transmitted by the first communication device; and/or obtaining second information comprises receiving information transmitted by the second communication device; and/or obtaining third information comprises receiving information transmitted by the third communication device.

A fourth aspect of the present disclosure relates to a non-transitory computer-readable medium storing instructions that, when executed by a plurality of processors, cause the processors to perform a method as described herein.

Features of any aspect or embodiment described herein may, wherever appropriate, be applied to any other aspect or embodiment described herein. Where reference is made to different embodiments or sets of embodiments, it should be understood that these are not necessarily distinct but may overlap.

### BRIEF DESCRIPTION OF THE DRAWINGS

Certain embodiments of the present disclosure will now be described in greater detail by way of example only and with reference to the accompanying drawings, in which:
Figure 1 schematically shows a communications management system;
Figure 2 schematically shows another communications management system; and
Figure 3 shows a flowchart of a communications management method.

### DETAILED DESCRIPTION

In conventional aerospace communications systems, plural communication devices of different types (e.g. HF/VHF/UHF radio, satellite communications, cellular, WiFi) transmit information to a centralised communications router which determines, based on the received information, at least one action to be taken. For example, the communications router may determine based on the received information that a communication transmitted by one of the communication devices should be (or should not be) forwarded to a destination receiver.

The information provided to the communications router may relate to characteristics of the communications devices, such as link status, transmission speed, latency and/or signal quality, among others. Although (at least some of) the same categories of information may be transmitted by each of the communication device types, the information transmitted by each of the different communication device types may be provided in a different format for each type of communication device. As a result, it is necessary for the conventional communications router to be able to receive information in a number of different formats and to store (or access) media policies that may be different for each type of communication device in order to be able to determine the one or more actions to be taken. This results in a communications router which is complex and may be difficult to maintain.

The inventors have realised that a simpler and more easily adaptable communications router is desirable.

The invention relates to using an intermediate layer of communications controllers (implemented as microservices) between a plurality of communication devices of different types and a centralised communications router, where each communication device type is connected to a respective microservice which manages the media policy for that communication device type and wherein the microservices all communicate with the communication router in a standardised format.

By providing the intermediate layer of controllers between the communication devices and the communications router, it may be possible to simplify the design and implementation of the communications router since the communications router does not need to manage individual media policies and different information formats for each communication device type.

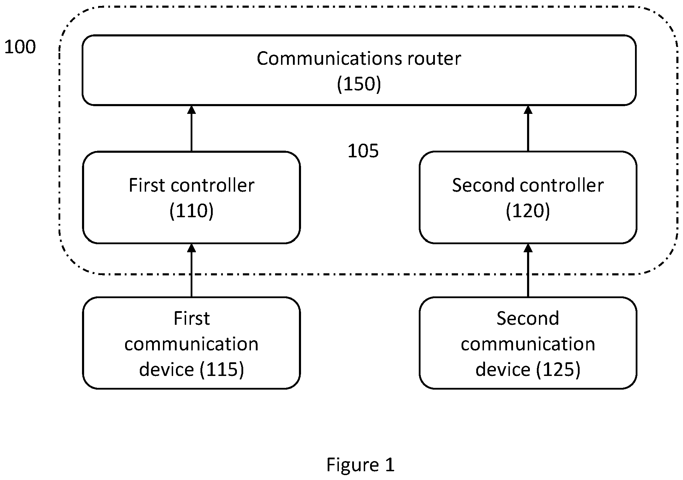

Figure 1 schematically shows a communications management system 105 according to the invention. The communications management system 105 comprises a first controller 110, a second controller 120, and a communications router 150.

The communications management system 105 forms part of a communications system 100. The communications system 100 additionally comprises a first communication device 115 and a second communication device 125.

The first communication device 115 is configured to transmit communications in a first format. The first format may be any suitable and desired format. In some embodiments, the first communication device 115 is configured to transmit communications via HF/VHF/UHF radio networks. In some embodiments, the first communication device 115 is configured to transmit communications using satellite communications networks (e.g. using low-earth orbit (LEO), medium earth orbit (MEO) and/or geostationary equatorial orbit (GEO) satellites). The first communication device 115 may be configured to transmit communications via Ku- and/or Ka-band frequencies. In some embodiments, the first communication device 115 is configured to transmit communications via WiFi networks. In some embodiments, the first communication device 115 is configured to transmit cellular communications, for example air to ground cellular communications. The skilled person will appreciate that other methods of communication and/or other communications networks may also be used by the first communication device 115.

The second communication device 125 is configured to transmit communications in a second format. The second format may be any suitable and desired format. In some embodiments, the second communication device 125 is configured to transmit communications via HF/VHF/UHF radio networks. In some embodiments, the second communication device 125 is configured to transmit communications using satellite communications networks (e.g. using low-earth orbit (LEO), medium earth orbit (MEO) and/or geostationary equatorial orbit (GEO) satellites). The second communication device 125 may be configured to transmit communications via Ku- and/or Ka-band frequencies. In some embodiments, the second communication device 125 is configured to transmit communications via WiFi networks. In some embodiments, the second communication device 125 is configured to transmit cellular communications, for example air to ground cellular communications. The skilled person will appreciate that other methods of communication and/or other communications networks may also be used by the second communication device 125.

The first communication device 115 and/or the second communication device 125 may be any suitable and desired communication devices. For example, the first communication device 115 and/or the second communication device 125 may be mobile communications devices. The first communication device 115 and/or the second communication device 125 may be located in or on a vehicle. The vehicle may be an aircraft. It will be appreciated that the term "aircraft" as used herein is interpreted broadly to mean both manned and unmanned aircraft (such as UAVs or "drones"). In other embodiments, the first communication device 115 and/or the second communication device 125 may be static communication devices, for example located at a ground station that communicates with one or more aircraft and/or with one or more other ground stations.

The communications router 150 is a centralised software application configured to receive information associated with the first communication device 115 and/or the second communication device 125 and to determine, based on the received information, at least one action to be taken. The action to be taken may be any suitable and desired action. The action to be taken may be, for example, to allow a communication (e.g. one or more data packets) transmitted by one of the first and/or second communication devices 115, 125 to be forwarded to a destination node within a communications network. Conversely, the action taken may be to block such a communication. This may occur when a signal quality or transmission speed is determined to be insufficient, or when the requirements of a user policy are not met, for example.

The communications router 150 may process data (e.g. make determinations) relating to one or more communication devices. When processing data relating to a plurality of communication devices, the communications router 150 may process this in parallel (e.g. so that processing tasks for at least two of the plurality of communication devices are carried out simultaneously) or serially (i.e. so that all of the processing tasks for one of the communications media are completed before the processing for the next communication media is begun). The type of processing (serial or parallel) may depend, for example, on the type of traffic being managed by the communications router 150 and/or on one or more policies governing the operation of the communications router 150.

As is known to those skilled in the art, a media policy (also referred to as a user policy) sets certain parameters for communications. For example, a media policy may specify that communications may only be permitted within a certain geographical area (e.g. in a particular country or above/below a certain altitude). This is also known as geofencing. As another example, a media policy may specify a cost associated with a particular type of communication or communication device that must be taken into account when determining whether or not to transmit communications from that device (type). Examples of other parameters that may be included in a media policy include those relating to permitted bandwidth usage and/or permitted latency for communications media. It will be appreciated that other parameters (not listed here) may also be included in a media policy, as known to those skilled in the art.

To simplify the operation of the communications router 150, the communications management system 105 comprises a first controller 110 configured to manage a first media policy associated with a first communication device 115, and a second controller 120 configured to manage a second media policy associated with a second communication device 125. The controllers 110, 120 are also configured to provide information relating to the respective communication devices to the communications router 150.

Although the information relating to the respective communication devices may be obtained in different formats (e.g. depending on the type of communication device), the information is provided by the respective controllers to the communications router 150 in a same (standardised) format. In this way, the communications router 150 receives information provided in the same format regardless of the origin of that information, which makes the operation of the communications router 150 simpler. There is no need for the communications router 150 itself to be able to handle different information formats or to store and/or access different media policies for each of the different communication device types and determine whether or not the requirements of such media policies are fulfilled. Instead, this is handled by the first and second controllers 110, 120.

The first and second controllers 110, 120 are implemented as microservices. The first controller 110 and the second controller 120 may be implemented in separate computing devices from one another and/or from the communications router 150. In this way, a distributed communications management system 105 can be provided.

The first controller 110 is configured to obtain first information associated with the first communication device 115 and to relay (at least a portion of) the obtained first information to the communications router 150. The first information comprises link status, speed, latency, signal quality and/or media cost.

Similarly, the second controller 120 is configured to obtain second information associated with the second communication device 125 and to relay (at least a portion of) the obtained second information to the communications router 150. The second information comprises link status, speed, latency, signal quality and/or media cost.

The second information is different to the first information. For example, the second information may be provided in a different format to the first information. It will be appreciated that the first information and the second information may comprise (at least some of) the same categories of information (e.g. link status, speed, latency, signal quality, media cost, etc.) but that these are provided in formats which are different from one another. The first controller 110 and the second controller 120 are configured to reconfigure the respective first information and second information into a same format to be received by the communications router 150. In other words, the communications router 150 receives from the first controller 110 reconfigured first information and from the second controller 120 reconfigured second information, where the reconfigured first information and the reconfigured second information are in a common format suitable to be processed by the communications router 150.

The first controller 110 is also configured to obtain information associated with a first media policy (also referred to herein as "first media policy information") governing the use of the first communication device 115. The first controller 110 may obtain the first media policy information in any suitable and desired manner. For example, the first media policy information may be stored in a database which can be accessed by the first controller 110.

The first controller 110 is configured to determine, based on the first information and the first media policy information, that the (one or more) requirements of the first media policy are fulfilled. The first controller 110 is further configured to reconfigure (at least a portion of) the first information into reconfigured first information, and to relay the reconfigured first information to the communications router 150.

The second controller 120 is also configured to obtain information associated with a second media policy governing the use of the second communication device 125. The second controller 120 may obtain the media policy information in any suitable and desired manner. For example, the media policy information associated with the second communication device 125 may be stored in a database which can be accessed by the second controller 120 (which may be the same database as or a different database from the database which stores the media policy information associated with the first communication device 115).

The second controller 120 is configured to determine, based on the second information and the second media policy information, that the (one or more) requirements of the second media policy are fulfilled. The second controller 120 is further configured to reconfigure (at least a portion of) the second information into reconfigured second information, and to relay the reconfigured second information to the communications router 150.

The first controller 110 and/or the second controller 120 may also be configured to receive additional information which can be used to determine whether or not the requirements of a media policy have been fulfilled. For example, the first controller 110 and/or the second controller 120 may receive sensor data relating to the 3D position, speed, or other characteristics of a vehicle in or on which the respective communication device is located. For example, when the additional information comprises 3D position, this may be used to determine whether a geographical requirement in a media policy is met.

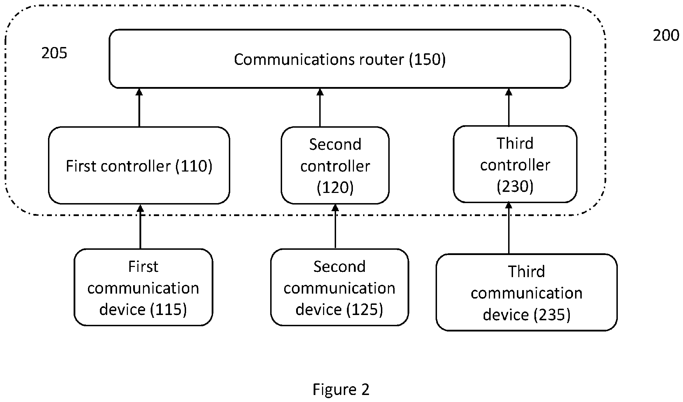

Figure 2 schematically shows another communications management system 205. The communications management system 205 shares a number of common components with the communications management system 100. For the sake of brevity, features which are identical to those already described above in connection with Figure 1 will not be described further.

The communications management system 205 forms part of a communications system 200. The communications system 200 differs from the communications system 100 in that it comprises a third communication device 235. The third communication device 235 is configured to transmit communications in a third format which is different from the first format of the first communication device 115 and from the second format of the second communication device 125.

The communications management system 205 also differs from the communications management system 105 in that the communications management system 205 additionally comprises a third controller 230. The third controller 230 may be configured with respect to the third communication device 235 in a similar manner to the first and second controllers 110, 120 described above. That is, the third controller 230 is implemented as a microservice and configured to obtain third information associated with the third communication device 235 and to relay (at least a portion of) the obtained third information to the communications router 150. The third information may comprise link status, speed, latency, signal quality and/or media cost. The third controller 230 also obtains third media policy information relating to a third media policy governing the use of the third communication device 235, for example by retrieving the third media policy information from a database.

The configuration of the first and second controllers 110, 120 is not affected by the addition of the third controller 230. In other words, the third controller 230 may be instantiated at any time, whether concurrently with or subsequently to the instantiation of the first and/or second controllers, without affecting the operation of the first and second controllers 110, 120. By providing a separate microservice controller for each (type of) communication device, it may be possible to provide a communications system which is particularly flexible and/or compact. In particular, each controller only needs to be able to manage its respective communication device (type) and further controllers may be instantiated as required even after the communications system has begun operations without it being necessary to reconfigure the entire communications system.

A communications system in accordance with the present invention may also comprise a further communication device which is configured to transmit communications in the first format (that is, in the same format as the first communication device 115). In some configurations of the communications system, a further controller (microservice) is instantiated to manage the further communication device such that each communication device is managed by a dedicated controller. In this way, the flexibility of the communications system may be maximised. It will of course be appreciated that in other configurations, the further communication device may instead be managed by the first controller.

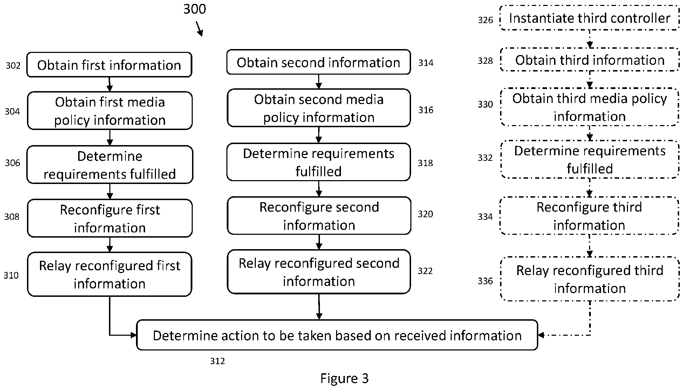

Figure 3 shows a flowchart of a method 300 for managing communications in an aerospace communications system such as those described above in connection with Figures 1 and 2.

In the method 300, the first controller 110 obtains 302 first information associated with the first communication device and obtains 304 first media policy information relating to a first media policy governing the use of the first communication device 115. As described herein, the first information may comprise link status, speed, latency, signal quality and/or media cost. The first media policy information may be obtained (retrieved) from a database storing media policy information.

Based on the first information and the first media policy information, the first controller 110 then determines that the requirements of the first media policy are fulfilled. After this determination has been made, the first controller 110 reconfigures the first information into another format suitable to be received by the communications router 150 and then relays the reconfigured first information to the communications router 150. The communications router 150 then determines 312 based on the reconfigured first information at least one action to be taken. This may be, for example, to route a communication transmitted by the first communication device to a particular intermediate node or destination node.

The method may further comprise obtaining 314, by a second controller 120, second information in the second format different from the first format and obtaining 316, by the second controller 120, second media policy information relating to a second media policy governing the use of the second communication device 125. The second controller may be instantiated on a separate computing device to the first controller. As described herein, the second information may comprise link status, speed, latency, signal quality and/or media cost. The second media policy information may be obtained (retrieved) from a database storing media policy information.

The method may further comprise determining 318, by the second controller 120, based on the second information and the second media policy information, that the requirements of the second media policy are fulfilled; reconfiguring 320, by the second controller 120, the second information into the other format suitable to be received by the communications router 150; relaying 322, by the second controller 120, the reconfigured second information to the communications router 150; and determining, by the communications router 150, based on the received reconfigured second information, at least one action to be taken.

The method may additionally comprise instantiating 326 a third microservice as a third controller 230 configured to obtain third information associated with a third communication device 235, wherein the third information is in a different format from the first and second formats. The third controller 230 may be instantiated in the same computing device or in a different computing device from the first controller 110, the second controller 120 and/or the communications router 150.

Once it has been instantiated, the third controller 230 obtains 328 the third information and obtains 330 the third media policy information relating to a third media policy governing the use of the third communication device 235. Based on the third information and the third media policy information, the third controller 230 determines that the requirements of the third media policy are fulfilled and then reconfigures 334 the third information into the other format suitable to be received by the communications router 150. The third controller 230 then relays 336 the reconfigured third information to the communications router 150. The communications router 150 then determines, based on the received reconfigured third information, at least one action to be taken.

It will be appreciated that although these method steps have been recited in a particular order, it may also be possible to perform at least some of these steps in a different order. As illustrated in Figure 3, certain steps require a temporal sequence (e.g. the sequences indicated in each of the three branches corresponding to a particular communication device) while it is possible to perform other steps independently of this temporal sequence.

It will further be appreciated that the first, second and third controllers may obtain the respective first, second and/or third information in any suitable and desired manner. For example, obtaining first, second and/or third information may comprise retrieving information from at least one memory resource. Alternatively or in addition, obtaining first, second and/or third information may comprise receiving information transmitted by the respective first, second and/or third communication device.

The invention also extends to a non-transitory computer-readable medium storing instructions which, when executed by a plurality of processors, perform a method as described herein.

It will be apparent from the above that the invention provides a number of benefits. The modular approach provided by the separate controllers for each communication device or communication device type makes it possible to separately manage (e.g. update) policy logic for each communication device type without impacting the main router function. The centralised router function is thus simplified. Maintenance of the system may also be made easier as a result. In addition, scalability is improved as new medias can be added without the need to modify the main router function thanks to the standardised information format provided by each of the media controllers.

Although embodiments of the invention have been described in connection with aerospace applications, it will be appreciated that at least some of the concepts of the present invention as disclosed herein may also be applicable to general communications management systems and/or methods (i.e. outside of an aerospace environment).

Although the invention has been described as implemented in software, the skilled person will appreciate that concepts of the invention may alternatively or additional be implemented in hardware.

It will be appreciated that although the communications management systems and methods illustrated in the drawings have been discussed as separate embodiments above, the features of any of these embodiments may be combined with features of any other embodiment(s) as is apparent to the skilled person. The figures and their associated description are provided by way of illustration only and are not intended to be limiting.

It will further be appreciated by those skilled in the art that the invention has been illustrated by describing one or more specific embodiments thereof, but is not limited to these embodiments; many variations and modifications are possible, within the scope of the accompanying claims. The scope of protection is defined by the appended claims.

## Claims

1. An aerospace communications management system (105, 205) comprising:
a communications router (150) configured to receive information associated with a first communication device (115) and/or a second communication device (125) and to determine, based on the received information, at least one action to be taken;
a first controller (110) implemented as a microservice and configured to obtain first information associated with the first communication device (115); and
a second controller (120) implemented as a microservice and configured to obtain second information associated with the second communication device (125), wherein the first information is different from the second information;
wherein the first controller (110) is configured to reconfigure the first information into reconfigured first information in a format suitable to be received by the communications router (150);
wherein the second controller (120) is configured to reconfigure the second information into reconfigured second information in the same format suitable to be received by the communications router (150);
wherein the first controller (110) is configured to obtain first media policy information relating to a first media policy governing the use of the first communication device (115), to determine, based on the first information and the first media policy information, that the requirements of the first media policy are fulfilled; and to relay, based on the determination that the requirements of the first media policy are fulfilled, the reconfigured first information to the communications router (150).

2. The communications management system (105, 205) according to claim 1, wherein the second controller (120) is configured to obtain second media policy information relating to a second media policy governing the use of the second communication device (125), to determine, based on the second information and the second media policy information, that the requirements of the second media policy are fulfilled; and to relay, based on the determination that the requirements of the second media policy are fulfilled, the reconfigured second information to the communications router (150).

3. The communications management system (105, 205) according to claim 1 or 2, wherein the first controller (110) and the second controller (120) are implemented in separate computing devices.

4. The communications management system (105, 205) according to any preceding claim, wherein each of the first information and the second information comprises at least one of: link status, speed, latency, signal quality and/or media cost.

5. The communications management system (105, 205) according to any preceding claim, wherein the first controller (110) and/or the second controller (120) is/are configured to obtain sensor data and to use the sensor data when determining that the requirements of the respective first and/or second media policy have been fulfilled.

6. The communications management system (205) according to any preceding claim, further comprising a third controller (230) implemented as a microservice and configured to obtain third information associated with a third communication device (235), wherein the third information is different from the first information and the second information, wherein the third controller (230) is configured to reconfigure the third information into reconfigured third information in the same format suitable to be received by the communications router (150), wherein the third controller (230) is configured to obtain third media policy information relating to a third media policy governing the use of the third communication device (235), to determine, based on the third information and the third media policy information, that the requirements of the third media policy are fulfilled; and to relay, based on the determination that the requirements of the third media policy are fulfilled, the reconfigured third information to the communications router (150).

7. An aerospace communications system (100, 200) comprising:
a first communication device (115) configured to transmit communications in a first format;
a second communication device (125) configured to transmit communications in a second format; and
a communications management system (105, 205) according to any of claims 1 to 6.

8. The communications system (200) of claim 7, further comprising:
a third communication device (230) configured to transmit communications in a third format and wherein the communications management system (205) is according to claim 6.

9. A computer-implemented method (300) of managing communications in an aerospace communications system (100, 200) comprising:
a first communication device (115) configured to transmit communications in a first format;
a second communication device (125) configured to transmit communications in a second format different from the first format;
a communications router (150) configured to receive information associated with the first communication device (115) and/or the second communication device (125) and to determine, based on the received information, an action to be taken;
a first controller (110) implemented as a microservice and configured to obtain first information associated with the first communication device (115); and a second controller (120) implemented as a microservice and configured to obtain second information associated with the second communication device (125);
the method (300) comprising:
obtaining (302), by the first controller (110), the first information;
obtaining (304), by the first controller (110), first media policy information relating to a first media policy governing the use of the first communication device (115);
determining (306), by the first controller (110), based on the first information and the first media policy information, that the requirements of the first media policy are fulfilled;
reconfiguring (308), by the first controller (110), the first information into another format suitable to be received by the communications router (150);
relaying (310), by the first controller (110), the reconfigured first information to the communications router (150); and
determining (312), by the communications router (150), based on the received reconfigured first information, at least one action to be taken.

10. The method (300) according to claim 9, further comprising:
obtaining (314), by the second controller (120), the second information in the second format different from the first format;
obtaining (316), by the second controller (120), second media policy information relating to a second media policy governing the use of the second communication device (125);
determining (318), by the second controller (120), based on the second information and the second media policy information, that the requirements of the second media policy are fulfilled;
reconfiguring (320), by the second controller (120), the second information into the other format suitable to be received by the communications router (150);
relaying (322), by the second controller (120), the reconfigured second information to the communications router (150); and
determining, by the communications router (150), based on the received reconfigured second information, at least one action to be taken.

11. The method (300) according to claim 9 or 10, wherein the first controller (110) and the second controller (120) are implemented in separate computing devices.

12. The method (300) according to any of claims 9 to 11, further comprising:
instantiating (326) a third microservice as a third controller (230) configured to obtain third information associated with a third communication device (235), the third information being in a different format from the first and second formats;
obtaining (328), by the third controller (230), the third information;
obtaining (330), by the third controller (230), third media policy information relating to a third media policy governing the use of the third communication device (235);
determining, by the third controller (230), based on the third information and the third media policy information, that the requirements of the third media policy are fulfilled;
reconfiguring (334), by the third controller (230), the third information into the other format suitable to be received by the communications router (150);
relaying (336), by the third controller (230), the reconfigured third information to the communications router (150); and
determining, by the communications router (150), based on the received reconfigured third information, at least one action to be taken.

13. The method (300) according to any of claims 9 to 12, wherein obtaining (302, 304, 314, 316, 328, 330) first information and/or second information and/or third information and/or first media policy information and/or second media policy information and/or third media policy information comprises retrieving information from at least one memory resource.

14. The method (300) according to any of claims 9 to 13, wherein obtaining (302) first information comprises receiving information transmitted by the first communication device (115); and/or wherein obtaining (314) second information comprises receiving information transmitted by the second communication device (125); and/or wherein obtaining (328) third information comprises receiving information transmitted by the third communication device (235).

15. A non-transitory computer-readable medium storing instructions that, when executed by a plurality of processors, cause the processors to perform a method (300) according to any of claims 9 to 14.
